# EUROPÄISCHE PATENTANMELDUNG

(11) **EP 4 653 931 A1**
(43) Veröffentlichungstag der Anmeldung: **26.11.2025**
(21) Anmeldenummer: 24177419.9
(22) Anmeldetag: 22.05.2024
(51) Int. Cl.: G02B 21/00, G02B 27/58, G01N 21/64

(54) **LICHTMIKROSKOPISCHES VERFAHREN, LICHTMIKROSKOP, BELEUCHTUNGS- UND DETEKTIONSVORRICHTUNG UND COMPUTERPROGRAMM**

(71) Anmelder: Abberior Instruments GmbH, 37077 Göttingen (DE); Institut für Nanophotonik Göttingen e.V., 37077 Göttingen (DE)
(72) Erfinder: SCHÖNLE, Andreas, 37085 Göttingen (DE); EGNER, Alexander, 37085 Göttingen (DE)
(74) Vertreter: Molière, Pascal Noël

(57) **Zusammenfassung**

Die Erfindung betrifft ein lichtmikroskopisches Verfahren, wobei ein Fokus des Beleuchtungslichts (B) in der Probe (2) erzeugt wird, wobei von Emittern in der Probe (2) ausgehendes Emissionslicht (E) zu einem Detektor (6) in einem Detektionsstrahlengang (5) gelangt, wobei der Detektor (5) eine Mehrzahl von in einer Detektionsebene (D) angeordneten Detektorelementen (60) umfasst, die das Emissionslicht (E) erfassen, wobei in dem Beleuchtungsstrahlengang (4) hintereinander eine erste Scanvorrichtung (7) und eine zweite Scanvorrichtung (8) angeordnet sind, die jeweils dazu ausgebildet sind, den Fokus des Beleuchtungslichts (B) in der Probe (2) zu verlagern, wobei die erste Scanvorrichtung (7) nur in dem Beleuchtungsstrahlengang (4) angeordnet ist, so dass das Emissionslicht (E) nur von der zweiten Scanvorrichtung (8) entscannt wird, wobei eine Relativposition (R) zwischen einem Zentrum (Z) einer Projektion (P) der Detektionsebene (D) in die Probe (2) und einer Fokusposition (F) des Beleuchtungslichts (B) in der Probe (2) ermittelt wird, wobei von den Detektorelementen (60) erfasste Detektionssignale unter Berücksichtigung der ermittelten Relativposition (R) ausgewertet werden sowie ein Lichtmikroskop (1), eine Beleuchtungs- und Detektionsvorrichtung und ein Computerprogramm zur Durchführung des Verfahrens.

## Beschreibung

### Technisches Gebiet der Erfindung

Die Erfindung betrifft ein lichtmikroskopisches Verfahren, d.h. ein Verfahren zur lichtmikroskopischen Bildgebung oder zum Lokalisieren und/oder Verfolgen vereinzelter Emitter in einer Probe sowie ein Lichtmikroskop, eine Beleuchtungs- und Detektionsvorrichtung und ein Computerprogramm zur Durchführung des Verfahrens.

### Stand der Technik

Aus dem Stand der Technik sind Lichtmikroskope bekannt, mit denen eine Probe über zwei unterschiedliche hintereinander im Strahlengang angeordnete Scanvorrichtungen mit Beleuchtungslicht, z.B. Anregungslicht, beleuchtet werden kann. Die Scanvorrichtungen haben üblicherweise unterschiedliche Eigenschaften, z.B. kann eine der Scanvorrichtungen eine hohe Scangeschwindigkeit ermöglichen, allerdings nur ein geringes Bildfeld abdecken, während die andere Scanvorrichtung ein größeres Bildfeld aufweist, aber langsamer ist. Dies ist typischerweise z.B. bei einer Kombination einer elektrooptischen Scanvorrichtung mit einer mechanischen Scanvorrichtung wie einem Galvanometerscanner der Fall.

Derartige Kombinationen unterschiedlicher Scanner (teilweise auch als "Tandemscanner" bezeichnet) können für verschiedene Anwendungen vorgesehen sein.

Beispielsweise ist aus der Veröffentlichung "Pixel hopping enables fast STED nanoscopy at low light dose" von B. Vin 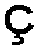 on, C. Geisler und A. Egner, Optics Express 28 (4), 4516-4528 (2020) ein konfokales Laserscanning-Mikroskopieverfahren bekannt, bei dem ein Anregungsfokus mit einem Galvanometerscanner über die Probe gescannt wird. Das in bestimmten Teilintervallen der Pixelverweilzeit erfasste Fluoreszenzlicht wird mit einem unteren Schwellwert verglichen, um zu ermitteln, ob sich an der entsprechenden Position markierte Probenstrukturen befinden. Wird der untere Schwellwert innerhalb des vordefinierten Zeitintervalls nicht erreicht, wird mit einer zweiten, elektrooptischen Scanvorrichtung ein Sprung des Anregungsfokus zur nächsten Scanposition vorgenommen. Ebenso kann zum nächsten Pixel gesprungen werden, wenn das für einen Pixel registrierte Licht eine obere Schwelle bereits nach einem Teilintervall der Pixelverweilzeit erreicht. Auf diese Weise kann einerseits die Probe durch geringere Belichtung geschont werden, andererseits kann die Gesamtmesszeit verringert werden. Da bei dem Verfahren die Pixelverweilzeiten über das Bildfeld unterschiedlich sind, haben Abweichungen zwischen Soll- und Istposition des Galvanometerscanners hier eine Auswirkung auf die Bildqualität. Mit dem schnelleren elektrooptischen Scanner können diese Abweichungen jedoch korrigiert werden. Das Emissionslicht wird durch den Galvanometerscanner und den elektrooptischen Scanner entscannt, um eine konfokale Detektion mit einer Avalanche-Fotodiode zu ermöglichen.

Dies hat den Nachteil, dass wegen der Polarisationsabhängigkeit des elektrooptischen Scanners die Hälfte des Fluoreszenzlichts verloren geht, was sich negativ auf das Signal-zu-Rausch-Verhältnis auswirkt.

Auch bei der Lokalisationsmikroskopie nach dem MINFLUX-Prinzip wird gemäß dem Stand der Technik häufig ein Tandemscanner, z.B. eine Kombination eines Galvanometerscanners und eines elektrooptischen Scanners, verwendet.

MINFLUX ist ein Verfahren zur Lokalisierung oder zum Verfolgen vereinzelter Emitter in einer Probe, bei dem eine Intensitätsverteilung von Beleuchtungslicht mit einem lokalen Minimum, z.B. ein Donut oder ein Bottle Beam, an Beleuchtungspositionen um eine vorab grob geschätzte Position eines vereinzelten Emitters positioniert wird, für die Beleuchtungspositionen Emissionslicht registriert wird und aus den Beleuchtungspositionen und den zugehörigen Lichtmengen mit einem Positionsschätzer eine neue geschätzte Position des vereinzelten Emitters erhalten wird. Aus den geschätzten Positionen kann je nach Ausgestaltung des Verfahrens ein superauflösendes Bild der Probe oder eine Trajektorie eines sich bewegenden Emitters bestimmt werden.

Verschiedene Ausgestaltungen eines MINFLUX-Verfahrens sind z.B. in den Veröffentlichungen F. Balzarotti et al., "Nanometer resolution imaging and tracking of fluorescent molecules with minimal photon fluxes", Science 355 (6325), 606-612 (2017), K. C. Gwosch et al., "MINFLUX nanoscopy delivers 3D multicolor nanometer resolution in cells", Nat. Methods, 17 (2), 217-224 (2020) und R. Schmidt et al., "MINFLUX nanometer-scale 3D imaging and microsecond-range tracking on a common fluorescence microscope", Nat. Commun. 12 (1), 1478 (2021) beschrieben.

Bei vielen MINFLUX-Verfahren wird ein Galvanometerscanner für eine Grobpositionierung des Beleuchtungslichtfokus (und teilweise auch für die Vorlokalisierung, also die initiale Ermittlung der grob geschätzten Position des Emitters) genutzt, während die Positionierung des Minimums der Intensitätsverteilung an den Beleuchtungspositionen mit einem schnellen elektrooptischen Scanner vorgenommen wird.

Elektrooptische Scanner haben den Vorteil einer sehr hohen Scangeschwindigkeit und Positionsgenauigkeit. Nachteilhaft ist jedoch neben dem geringen Bildfeld die Polarisationsabhängigkeit, die dazu führt, dass ein Teil des Fluoreszenzlichts verloren geht, wenn es durch den elektrooptischen Scanner entscannt wird.

Da ein solcher Lichtverlust bei den geringen Emissionslichtmengen der MINFLUX-Technik nicht tolerierbar ist, wird das Emissionslicht in MINFLUX-Mikroskopen in der Regel nur durch den Galvanometerscanner entscannt, durchläuft jedoch auf seinem Weg zum Detektor nicht den elektrooptischen Scanner.

Bei solchen Mikroskopen erfolgt dann keine perfekt konfokale Detektion, da sich die Auslenkung des Fokus durch den elektrooptischen Scanner auf die Position des Emissionslichts in der Detektionsebene auswirkt.

Die durch den elektrooptischen Scanner vermittelten Ablenkungen des Fokus sind bei der MINFLUX-Technik zwar typischerweise gering im Vergleich zur Größe der konfokalen Lochblende. Dennoch kann die Abweichung von der konfokalen Detektion durch das nur teilweise Entscannen einen Effekt auf die Menge des detektierten Emissionslichts und somit auf die Positionsschätzung haben, insbesondere in frühen Schritten iterativer MINFLUX-Verfahren, bei denen die Ablenkungen größer sind.

### Aufgabe der Erfindung

Hieraus ergibt sich die Aufgabe, ein lichtmikroskopisches Verfahren unter Verwendung von zwei unabhängigen Scanvorrichtungen zur Verfügung zu stellen, bei dem die Vorteile der unterschiedlichen Scanvorrichtungen genutzt werden können, ohne eine Einbuße der Signalqualität hinnehmen zu müssen.

### Lösung

Diese Aufgabe wird durch das Verfahren, das Lichtmikroskop, die Beleuchtungs- und Detektionsvorrichtung und das Computerprogramm gemäß den unabhängigen Ansprüchen gelöst. Vorteilhafte Weiterbildungen sind in den Unteransprüchen angegeben und werden im Folgenden beschrieben.

### Beschreibung der Erfindung

Ein erster Aspekt der Erfindung betrifft ein lichtmikroskopisches Verfahren, wobei eine Probe über einen Beleuchtungsstrahlengang mit Beleuchtungslicht beleuchtet wird, wobei ein Fokus des Beleuchtungslichts in der Probe erzeugt wird, wobei von Emittern in der Probe ausgehendes Emissionslicht über einen teilweise mit dem Beleuchtungsstrahlengang zusammenfallenden Detektionsstrahlengang zu einem Detektor gelangt, wobei der Detektor eine Mehrzahl von in einer Detektionsebene angeordneten Detektorelementen umfasst, die das Emissionslicht erfassen, wobei die Detektionsebene eine Bildebene bezüglich einer Fokusebene in der Probe ist, in welcher der Fokus des Beleuchtungslichts angeordnet ist, wobei in dem Beleuchtungsstrahlengang hintereinander eine erste Scanvorrichtung und eine zweite Scanvorrichtung angeordnet sind, die jeweils dazu ausgebildet sind, den Fokus des Beleuchtungslichts in der Probe zu verlagern, und wobei die zweite Scanvorrichtung in dem gemeinsamen Beleuchtungsstrahlengang und Detektionsstrahlengang angeordnet ist, während die erste Scanvorrichtung nur in dem Beleuchtungsstrahlengang angeordnet ist, so dass das Emissionslicht nur von der zweiten Scanvorrichtung entscannt wird, und wobei eine von einer Ablenkung des Beleuchtungslichts durch die erste Scanvorrichtung und die zweite Scanvorrichtung sowie eine Ablenkung des Emissionslichts durch die zweite Scanvorrichtung abhängige Relativposition zwischen einem Zentrum einer Projektion der Detektionsebene in die Probe und einer Fokusposition des Beleuchtungslichts in der Probe ermittelt wird, wobei von den Detektorelementen erfasste Detektionssignale unter Berücksichtigung der ermittelten Relativposition ausgewertet werden.

Bei dem Verfahren wird also bezüglich der zweiten Scanvorrichtung eine descanned-Anordnung, jedoch bezüglich der ersten Scanvorrichtung eine non-descanned-Anordnung realisiert. Dadurch, dass das Emissionslicht nicht durch die erste Scanvorrichtung entscannt wird, können insbesondere auch polarisationsabhängige Scanner, wie beispielsweise elektrooptische Deflektoren, in der ersten Scanvorrichtung verwendet werden, ohne einen Signalverlust zu erleiden. Im Gegensatz zu einem Einzeldetektor hinter einer Lochblende im Detektionsstrahlengang ermöglicht die Verwendung eines Detektors mit einer Mehrzahl von in einer Detektionsebene angeordneten Detektorelementen in dieser Anordnung eine Erfassung von Emissionslicht auch in Situationen, in denen die erste Scanvorrichtung das Beleuchtungslicht so weit auslenkt, dass das Emissionslicht nicht mehr auf einen Einzeldetektor treffen würde. In diesem Fall wandert das Emissionslicht auf dem Detektor in der Detektionsebene und trifft in Abhängigkeit der Ablenkung des Beleuchtungslichts durch die erste Scanvorrichtung auf unterschiedliche Detektorelemente.

Erfindungsgemäß wird dieses Verhalten bei der Auswertung der Detektionssignale berücksichtigt, indem eine Relativposition zwischen dem Zentrum der Projektion der Detektionsebene in die Probe und der Fokusposition ermittelt wird und die Auswertung auf Basis dieser Relativposition durchgeführt wird. Das besagte Zentrum entspricht dabei insbesondere dem Punkt in der Detektionsebene, auf den das Emissionslicht trifft oder treffen würde, wenn die erste Scanvorrichtung das Beleuchtungslicht nicht ablenkt (sich also in einer Nullposition befindet). In der letztgenannten Situation sind der Fokus des Beleuchtungslichts in der Probe und das in die Detektionsebene abgebildete Emissionslicht konfokal.

Eine Abweichung von der Konfokalität durch eine Auslenkung des Beleuchtungslichtstrahls mittels der ersten Scanvorrichtung (die sich in der Verschiebung der Relativposition äußert) wird erfindungsgemäß bei der Bestimmung eines lichtmikroskopischen Bildes oder einer Position eines vereinzelten Emitters in der Probe berücksichtigt.

Die Relativposition kann insbesondere als Vektor in einem Koordinatensystem dargestellt werden, dessen Ursprung das Zentrum der Projektion der Detektionsebene in die Probe bilden kann. Insbesondere kann die Detektionsebene in die Fokusebene projiziert werden, so dass dieser Vektor ebenfalls in der Fokusebene liegt. Alternativ kann die Detektionsebene jedoch auch in eine von der Fokusebene abweichende Ebene in der Probe projiziert werden, so dass der Vektor eine von Null verschiedene axiale Komponente (parallel zu einer optischen Achse des Objektivs, welches das Beleuchtungslicht in die Probe fokussiert) aufweisen kann.

Die Relativposition in der Fokusebene in der Probe muss nicht explizit bestimmt werden, solange eine Größe bestimmt wird, die repräsentativ für die Abweichung von der Konfokalität ist. Alternativ zu der Relativposition kann z.B. auch die von der Auslenkung des Fokus durch die erste Scanvorrichtung abhängige Verschiebung der Detektions-PSF in der Detektionsebene bestimmt werden. Aus dieser lässt sich dann unter Berücksichtigung des Abbildungsmaßstabs die Relativposition zwischen dem Zentrum der Projektion und der Fokusposition bestimmen.

Bei dem Beleuchtungslicht kann es sich z.B. um Anregungslicht handeln, das Lichtemissionen von Emittern in der Probe induziert. Dies kann beispielsweise durch eine Fluoreszenzanregung von Fluorophoren erfolgen. Aber auch Beleuchtungslicht, das von Emittern in der Probe gestreut oder reflektiert wird, fällt im Kontext der vorliegenden Spezifikation unter den Begriff "Anregungslicht". Alternativ dazu kann das Beleuchtungslicht z.B. auch Verhinderungslicht sein, das Lichtemissionen von Emittern in der Probe verhindert. Hierunter fällt z.B. STED-Licht, das Emitter in der Probe durch stimulierte Emissionsdepletion vom angeregten Zustand in den Grundzustand befördert. Selbstverständlich kann die Probe auch mit kombiniertem Anregungslicht und Verhinderungslicht beleuchtet werden, das insbesondere auch gemeinsam fokussiert und über die Probe gescannt werden kann.

Entsprechend der Art des Beleuchtungslichts kann es sich bei dem Emissionslicht z.B. um Fluoreszenzlicht, reflektiertes Licht oder Streulicht handeln.

Unter Emittern werden in dieser Anmeldung Objekte verstanden, die, wenn sie mit Beleuchtungslicht beleuchtet werden, mit Blick auf die erfindungsgemäßen Messungen als Punktlichtquellen betrachtet werden können. Je nach Art des Beleuchtungslichts kann ein Emitter also z.B. ein lichtreflektierendes Nanopartikel, ein *Quantum Dot,* ein fluoreszierendes Farbstoffmolekül (Fluorophor) oder ein mit einem oder mehreren Fluoreszenzfarbstoffmolekülen markiertes Molekül oder Nanopartikel sein. Je nach Größe des Moleküls und Abstand der Fluorophore kann ein mit mehreren Fluorophoren markiertes Molekül oder ein mit mehreren Fluorophoren markiertes Nanopartikel selbstverständlich auch mehrere Emitter im Sinne der hier verwendeten Definition aufweisen.

Je nach Art des Detektors und Art der Messung können die Detektorelemente auf unterschiedliche Weise Detektionssignale erzeugen, wenn sie Emissionslicht erfassen. Bestimmte Detektorelemente, wie z.B. Avalanche-Fotodioden (APDs) oder Hybriddetektoren, sind z.B. in der Lage, einzelne Photonen zu erfassen, wobei es insbesondere mit geeigneter Auswerteelektronik möglich sein kann, Ankunftszeiten einzelner Photonen zu bestimmen. Bei anderen Detektortypen, wie z.B. Fotomultipliern, lässt sich mittels eines analogen elektrischen Detektionssignals eine Photonenrate, also eine Anzahl erfasster Photonen in einem bestimmten Zeitintervall, messen.

Insbesondere sind die Detektorelemente unabhängig voneinander auslesbar. Im Gegensatz zu Kameras, bei denen Pixel zeilenweise oder gruppenweise ausgelesen werden, ist eine unabhängige Auslesung z.B. bei APD-Arrays oder Hybriddetektor-Arrays, möglich. Bei einer unabhängigen Auslesbarkeit der Detektorelemente lassen sich die Detektionssignale auf Basis der Relativposition flexibler und genauer auswerten. APD-Arrays haben die zusätzlichen Vorteile einer hohen Messgeschwindigkeit und einer niedrigen Dunkelzählrate. Limitierungen bestehen hinsichtlich der Größe der Detektionsfläche und der Anzahl von Pixeln. In letzter Zeit sind jedoch zunehmend größere und feiner pixelierte APD-Arrays entwickelt worden. Eine feine Pixelierung ist für die vorliegende Erfindung vorteilhaft, da mit einer größeren Anzahl an Pixeln die Auswertung der Detektorsignale genauer an die ermittelte Relativposition angepasst werden kann, insbesondere mit geringerem Signalverlust.

Die erste Scanvorrichtung und die zweite Scanvorrichtung sind nicht parallel zueinander, sondern hintereinander im Beleuchtungsstrahlengang angeordnet. Dies bedeutet nicht zwangsläufig, dass die erste Scanvorrichtung und die zweite Scanvorrichtung unmittelbar hintereinander angeordnet sind. Natürlich können insbesondere weitere optische Elemente zwischen der ersten Scanvorrichtung und der zweiten Scanvorrichtung angeordnet sein.

Gemäß einer Ausführungsform wird die Relativposition auf Basis eines Positionssignals der ersten Scanvorrichtung und/oder eines Positionssignals der zweiten Scanvorrichtung bestimmt. Das Positionssignal kann z.B. ein Soll-Positionssignal sein, das von einer Steuereinheit an die optischen Einheiten der ersten bzw. zweiten Scanvorrichtung gesendet wird, damit die optischen Einheiten eine Sollablenkung des Beleuchtungslichts durchführen. Alternativ kann das Positionssignal z.B. auch ein Ist-Positionssignal sein, das einen Istzustand der optischen Einheiten der ersten oder zweiten Scanvorrichtung angibt, z.B. die tatsächliche Winkelposition eines Spiegels eines Galvanometerscanners. Ein solcher Istzustand kann auf verschiedene Weise bestimmt werden, z.B. mittels eines Positionsencoders oder eines optischen Sensors. Galvoscanner verfügen z.B. oft über ein Ausgangspositionssignal für die Feedback-Kontrolle, das einen Unterschied zwischen einem Sollpositionssignal und einer Istposition des Galvanometerspiegels repräsentiert, der insbesondere durch eine Phasenverschiebung und/oder eine Dämpfung zustande kommen kann.

Insbesondere kann aus der Kenntnis der Soll- und/oder Istpositionen der Scanvorrichtungen auf die tatsächliche Ablenkung des Beleuchtungslichts durch die erste Scanvorrichtung und die zweite Scanvorrichtung geschlossen werden, die es wiederum erlaubt, die Relativposition zwischen dem Fokus des Beleuchtungslichts in der Probe und dem Zentrum der Projektion der Detektionsebene in die Probe zu bestimmen.

Gemäß einer weiteren Ausführungsform wird die Relativposition auf Basis eines Ist-Positionssignals der zweiten Scanvorrichtung oder auf Basis einer Abweichung zwischen einem Soll-Positionssignal und einem Ist-Positionssignal der zweiten Scanvorrichtung bestimmt oder auf Basis eines Soll-Positionssignals der zweiten Scanvorrichtung geschätzt. Für die erste Scanvorrichtung kann dabei insbesondere angenommen werden, dass das Ist-Positionssignal dem Sollpositionssignal entspricht. Dies kann insbesondere der Fall sein, wenn die erste Scanvorrichtung deutlich schneller auf die Positionssignale reagiert als die zweite Scanvorrichtung, z.B. bei einer Kombination einer ersten elektrooptischen Scanvorrichtung (z.B. auf Basis von elektrooptischen Deflektoren) und einer zweiten mechanischen Scanvorrichtung (z.B. auf Basis von Galvanometerscannern). In diesem Fall kann die Relativposition insbesondere auf Basis des Sollpositionssignal der ersten Scanvorrichtung und der Abweichung zwischen dem Soll-Positionssignal und dem Ist-Positionssignal der zweiten Scanvorrichtung bestimmt werden. In einer konkreten Umsetzung könnte z.B. die Relativposition aus dem Soll-Positionssignal einer ersten elektrooptischen Scanvorrichtung und dem Feedbacksignal (Abweichung zwischen Soll- und Istposition) einer zweiten galvanometrischen Scanvorrichtung ermittelt werden.

Gemäß einer weiteren Ausführungsform wird die erste Scanvorrichtung auf Basis der Abweichung zwischen dem Soll-Positionssignal und dem Ist-Positionssignal der zweiten Scanvorrichtung angesteuert, um die Fokusposition zu korrigieren. Bei manchen Scanvorrichtungen, insbesondere auf Basis von Galvanometerscannern, treten regelmäßig Positionsfehler auf, die zu einer Abweichung einer tatsächlichen Scankurve (also der Trajektorie des Beleuchtungslichtfokus in der Probe) von einer gewünschten Scankurve führen können.

Diese können insbesondere unter Bedingungen auftreten, bei denen mechanische Komponenten wie Galvanometerspiegel hohen Beschleunigungen ausgesetzt sind, beispielsweise an Umkehrpunkten eines Rasterscans oder auch bei unregelmäßigen Bewegungen wie schnellen Sprüngen. Wenn die erste Scanvorrichtung eine höhere Geschwindigkeit aufweist als die zweite Scanvorrichtung, lassen sich solche Abweichungen vorteilhafterweise korrigieren, indem z.B. ein Signal, das die Abweichung zwischen der Sollposition und der Istposition der zweiten Scanvorrichtung repräsentiert, der Steuerung der ersten Scanvorrichtung zugeführt wird. Auf diese Weise kann die Qualität der Bilderzeugung weiter verbessert werden, indem Scanartefakte vermieden werden. Durch die erfindungsgemäße Berücksichtigung der Relativposition bei der Auswertung kann diese Vermeidung von Scanartefakten vorteilhafterweise ohne einen Verlust der Konfokalität erreicht werden.

Gemäß einer weiteren Ausführungsform wird der Fokus des Beleuchtungslichts mit der ersten Scanvorrichtung mit einer höheren Geschwindigkeit abgelenkt als mit der zweiten Scanvorrichtung. Mit dem Begriff "Geschwindigkeit" ist hier insbesondere eine Bandbreite der Scanvorrichtung gemeint, die angibt, wie viele Positionen die Scanvorrichtung innerhalb eines vorgegebenen Zeitintervalls, z.B. einer Sekunde, ansteuern kann. Die Geschwindigkeit oder Bandbreite kann abhängig von der Art der Scanvorrichtung durch verschiedene Parameter bestimmt werden. Zu diesen können insbesondere eine Reaktionszeit der Steuerelektronik gehören, die zwischen dem Empfang eines Steuersignals und der Reaktion der Elektronik vergeht. Weiterhin kann die Zeit, in der z.B. in einer Treiberschaltung eine elektrische Spannung aufgebaut wird oder ein elektrischer Strom fließt, die Geschwindigkeit der Scanvorrichtung beeinflussen. Bei mechanischen Scannern wie Galvanometerscannern kann außerdem die Trägheit von beweglichen optischen Elementen wie Galvospiegeln hinsichtlich der Scangeschwindigkeit eine Rolle spielen.

Gemäß einer weiteren Ausführungsform wird die Relativposition auf Basis eines Signals eines Positionssensors bestimmt. Ein solcher Positionssensor kann bezüglich der entsprechenden Scanvorrichtung intern oder extern vorgesehen sein. Insbesondere bei mechanischen Scannern wie Galvanometerscannern kann der Positionssensor die aktuelle Position eines beweglichen optischen Elements wie eines Galvospiegels erfassen. Allgemein ist es aber auch möglich, dass der Positionssensor die Position des Beleuchtungslichtstrahls an einer geeigneten Stelle im Beleuchtungsstrahlengang erfasst.

Das Ausgangssignal des Positionssensors kann wie oben für Positionssignale der Scanvorrichtungen beschrieben insbesondere zusätzlich für eine Korrektur von Abweichungen zwischen einer Sollposition und einer Istposition von Komponenten einer der Scanvorrichtungen oder beider Scanvorrichtungen oder für eine Korrektur von Abweichungen zwischen einer gewünschten Scankurve und einer tatsächlichen Scankurve des Beleuchtungslicht-Fokus genutzt werden.

Gemäß einer weiteren Ausführungsform wird die Relativposition aus einer Verteilung von durch die Detektorelemente erfassten Lichtemissionen in der Detektionsebene bestimmt. Eine Verschiebung der Relativposition zwischen dem Fokus des Beleuchtungslichts in der Probe und dem Zentrum der Projektion der Detektionsebene in die Probe (die durch unterschiedliche Auslenkungen des Beleuchtungslichts durch die erste Scanvorrichtung und die zweite Scanvorrichtung bei nur teilweisem Entscannen zustande kommt) führt zu einem Wandern des Emissionslichts in der Detektionsebene, das sich durch Auswertung der Detektionssignale der einzelnen Detektorelemente analysieren lässt.

Gemäß einem einfachen Beispiel könnte z.B. für jede Scanposition des Fokus des Beleuchtungslichts in der Probe das Detektorelement oder die Gruppe von benachbarten Detektorelementen ermittelt werden, das am meisten Emissionslicht erfasst. Unter Zuhilfenahme der bekannten Dimensionen des Detektors und des bekannten oder durch Messung ermittelbaren Abbildungsmaßstabs der Mikroskopoptik lässt sich daraus die Relativposition ableiten. Wie oben erwähnt muss die Relativposition in der Probe nicht explizit berechnet werden. Auch die Berücksichtigung des Wanderns der Abbildung der Detektions-PSF auf dem Detektor bei der Auswertung fällt bereits unter den Gegenstand der vorliegenden Erfindung, da hierdurch die definitionsgemäße Relativposition indirekt bestimmt und verwendet wird. Vorausgesetzt, dass der Detektor und die Rechen- und Steuerelektronik des Mikroskops diese Informationen ausreichend schnell verarbeiten kann, könnte neben der erfindungsgemäßen Berücksichtigung der Relativposition in der Auswertung auch eine Korrektur der Positionssignale für die erste Scanvorrichtung und/oder die zweite Scanvorrichtung auf dieser Basis erfolgen.

Gemäß einer weiteren Ausführungsform ist das Beleuchtungslicht Anregungslicht, das die Emitter in der Probe zur Aussendung des Emissionslichts anregt. Insbesondere kann das Anregungslicht die Emitter zur Fluoreszenz anregen.

Gemäß einer weiteren Ausführungsform ist das Beleuchtungslicht Verhinderungslicht, das eine Aussendung des Emissionslichts von durch zusätzliches Anregungslicht angeregten Emittern in der Probe verhindert. Dabei kann das Verhinderungslicht insbesondere STED-Licht sein. Das zusätzliche Anregungslicht kann insbesondere gemeinsam mit dem Verhinderungslicht den Beleuchtungsstrahlengang beleuchten und insbesondere mittels der ersten Scanvorrichtung und/oder der zweiten Scanvorrichtung über die Probe gescannt werden.

Gemäß einer weiteren Ausführungsform wird an dem Fokus des Beleuchtungslichts in der Probe eine Intensitätsverteilung des Beleuchtungslichts mit einem lokalen Intensitätsminimum, insbesondere einer Intensitätsnullstelle, gebildet. Das lokale Intensitätsminimum kann ein zentrales Intensitätsminimum sein, das insbesondere am geometrischen Fokus angeordnet ist. Weiterhin kann das lokale Intensitätsminimum insbesondere (idealerweise) eine Intensitätsnullstelle sein. Insbesondere grenzen an das lokale Intensitätsminimum in mindestens einer Raumrichtung (weiter insbesondere in zwei oder drei Raumrichtungen) Intensitätsanstiegsbereiche an. Das lokale Minimum kann punktförmig, linienförmig oder flächenförmig sein.

Beispielsweise kann es sich bei der Intensitätsverteilung um einen Donut handeln, bei dem das lokale Minimum in der Fokusebene, also lateral (jedoch nicht entlang der optischen Achse, also axial) von Intensitätsanstiegsbereichen umgeben ist, oder z.B. um einen sogenannten *bottle beam* (teilweise auch als 3D-Donut bezeichnet), bei dem das lokale Minimum sowohl lateral als auch axial von Intensitätsanstiegsbereichen umgeben ist. Ein Donut kann z.B. durch Phasenmodulation des Beleuchtungslichts in oder nahe einer Pupillenebene, die zu der Rückapertur des Mikroskopobjektivs konjugiert ist, mit einem Vortex-Phasenmuster (auch Phasenuhr), gebildet werden. Ein *bottle beam* lässt sich durch eine Phasenmodulation des Beleuchtungsmusters mit einem ringförmigen Phasenmuster in oder nahe der Pupillenebene erzeugen. Schließlich lassen sich Intensitätsverteilungen mit flächenförmigem lokalem Minimum (teilweise auch als Halbmond-Intensitätsverteilung bezeichnet) durch Phasenmodulation mit einem einfach segmentierten Phasenmuster erreichen.

Intensitätsverteilungen mit einem lokalen Intensitätsminimum, die von Scanvorrichtungen über eine Probe gescannt werden, kommen beispielsweise bei der STED-Mikroskopie und der MINFLUX-Mikroskopie zum Einsatz.

Bei der STED-Mikroskopie wird typischerweise eine STED-Licht-Intensitätsverteilung mit lokalem Minimum mit einem regulären Fokus von Fluoreszenzanregungslicht überlagert, wobei das Maximum des Anregungslichts auf das Minimum des STED-Lichts gelegt wird, und wobei das Anregungslicht und das STED-Licht gemeinsam über die Probe gescannt werden. Durch eine Verschmälerung der effektiven Detektions-Punktspreizfunktion durch das STED-Licht lassen sich auf diese Weise Rasterbilder mit einer Auflösung unterhalb der Beugungsgrenze (d.h. besser als die Beugungsgrenze) aufnehmen.

Bei der MINFLUX-Mikroskopie wird die Probe typischerweise mit einer Intensitätsverteilung von Anregungslicht mit einem lokalen Minimum an Beleuchtungspositionen um eine vorab grob geschätzte Position eines vereinzelten Emitters beleuchtet, es wird für jede Beleuchtungsposition ein Emissionssignal aus der Probe registriert und anschließend wird mittels eines Positionsschätzers die Position des vereinzelten Emitters mit erhöhter Genauigkeit bestimmt. Dieses Verfahren kann dann iterativ wiederholt werden, wobei im Stand der Technik eine Auflösung im unteren einstelligen Nanometerbereich erreicht wurde. Als vereinzelte Emitter bezeichnet man dabei Emitter (z. B. einzelne Fluorophore oder andere Punktlichtquellen) in einem lichtemittierenden Zustand, die einen Abstand oberhalb der Beugungsgrenze aufweisen oder anderweitig optisch trennbar sind. Es wurden auch Varianten der MINFLUX-Technik beschrieben, bei denen eine Anregungslichtverteilung mit einem Maximum am geometrischen Fokus mit einer STED-Licht-Intensitätsverteilung mit einem lokalen Minimum kombiniert und an die besagten Beleuchtungspositionen verlagert wurde, um aus den jeweiligen Lichtemissionen die Position des vereinzelten Emitters zu bestimmen.

Gemäß einer weiteren Ausführungsform bewirkt das Auswerten der von den Detektorelementen erfassten Detektionssignale ein *Optical Sectioning* des Emissionslichts durch eine synthetische Lochblende, wobei ein Zentrum der synthetischen Lochblende auf Basis der bestimmten Relativposition festgelegt wird. Als "synthetische Lochblende" wird hier eine Gruppe von Detektorelementen des Detektors verstanden, die zumindest eine erste Untergruppe von Detektorelementen und eine zweite Untergruppe von Detektorelementen aufweisen, wobei die zweite Untergruppe die erste Untergruppe umgibt. Für die Bildgebung oder für die Positionsschätzung eines Emitters werden nur die Emissionssignale der Detektorelemente der inneren Untergruppe verwendet. Auf diese Weise lässt sich eine Lochblende im Detektionsstrahlengang mithilfe eines Detektors mit mehreren Detektorelementen nachbilden und wie mit der physischen Lochblende lässt sich das Licht aus Ebenen oberhalb und unterhalb der Fokusebene in der Probe ausblenden ("*Optical Sectioning*")*.* Die erste Untergruppe kann aus einem einzigen Detektorelement oder mehreren Detektorelementen bestehen. Weiterhin können die erste Untergruppe und die zweite Untergruppe sämtliche Detektorelemente des Detektors umfassen oder es kann mindestens eine weitere Untergruppe von Detektorelementen geben.

Bei einem herkömmlichen konfokalen Laserscanning-Mikroskop mit physischer Lochblende und Einzeldetektor (z.B. einem Fotomultiplier oder einer einzelnen Avalanche-Fotodiode) wird der Strahlengang so justiert, dass das Emissionslicht auf die Lochblende zentriert ist.

Bei dem erfindungsgemäßen Verfahren kann das Emissionslicht aufgrund des nur teilweisen Entscannens des Emissionslichts abhängig von der relativen Auslenkung des Beleuchtungslichts durch die erste Scanvorrichtung in der Detektionsebene wandern. Mit der oben beschriebenen Ausführungsform, bei der das Zentrum der synthetischen Lochblende auf Basis der Relativposition festgelegt wird, werden die erste Untergruppe und die zweite Untergruppe davon abhängig für die Auswertung der Emissionssignale ausgewählt, an welcher Stelle in der Detektionsebene der Lichtfleck des Emissionslichts sich befindet. Insbesondere werden die Untergruppen so ausgewählt, dass das Maximum der Emissionslichtverteilung auf das einzige Detektorelement oder ein zentrales Detektorelement der ersten Untergruppe fällt.

Gemäß einer weiteren Ausführungsform umfasst das Auswerten der von den Detektorelementen erfassten Detektionssignale eine gewichtete Summenbildung der Detektionssignale. Mit anderen Worten, die Detektionssignale der Detektorelemente werden mit Gewichten multipliziert, insbesondere wobei die Gewichte reelle Zahlen von 0 bis 1 sein können. Dann wird eine Summe der gewichteten Detektionssignale gebildet. Diese Summe wird bei der Auswertung der Detektionssignale verwendet. Da die Gewichte auch die Zahlen 0 und 1 umfassen können, schließt diese Ausführungsform insbesondere auch die oben beschriebene Realisierung einer synthetischen Lochblende mit ein, wenn die Detektorelemente der ersten Untergruppe das Gewicht 1 erhalten und die Detektorelemente der zweiten Untergruppe das Gewicht 0 erhalten. Selbstverständlich sind aber auch vielfältige Alternativen möglich. Z.B. könnte auch eine "halbtransparente" Lochblende (Verwendung eines Gewichts zwischen 0 und 1 für die zweite Untergruppe) oder eine Lochblende mit "weicher Kante" (durch einen graduellen Anstieg der Gewichte von außen nach innen) implementiert werden.

Gemäß einer weiteren Ausführungsform umfasst das Auswerten der von den Detektorelementen erfassten Detektionssignale eine Verrechnung von von einzelnen Detektorelementen aufgenommenen Scanbildern der Probe, insbesondere durch ein *Pixel Reassignment* oder eine Bildentfaltung. Dabei wird insbesondere auf Basis der ermittelten Relativposition ein zentrales Detektorelement oder eine zentrale Gruppe von Detektorelementen bestimmt. Dabei kann insbesondere ein Scanbild nach dem Prinzip der Image-Scanning-Mikroskopie aufgenommen werden.

Der Begriff "Pixel Reassignment" beschreibt eine Überlagerung der Einzelbilder des Scanfeldes der einzelnen Detektorelemente, wobei die Pixel der Einzelbilder abhängig von einem Positionsvektor des entsprechenden Detektorelements relativ zu dem zentralen Detektorelement oder relativ zu dem Zentrum der Detektionsebene um einen sogenannten Shift-Vektor verschoben und optional mit einem Skalierungsfaktor skaliert werden und anschließend die Pixelintensitäten der Einzelbilder aufsummiert werden. Dabei kann eine sogenannte Sheppard-Summe gebildet werden, d.h. es können die theoretischen Shift-Vektoren verwendet werden. Alternativ ist es auch möglich, empirisch bestimmte Shift-Vektoren zu verwenden. Diese Methoden können insbesondere zu einer bedeutenden Steigerung der axialen Auflösung durch Optical Sectioning und einer geringfügigen Steigerung der lateralen Auflösung (wie bei einer auf ca. 0,2 Airy Units geschlossenen Lochblende) bei gleichzeitiger Verbesserung des Signal-zu-Rausch-Verhältnisses führen.

Die Bildentfaltung ist insbesondere eine Multi-Bildentfaltung auf Basis der Einzelbilder der einzelnen Detektorelemente. Für die Entfaltung können verschiedenste nicht-iterative oder iterative Algorithmen verwendet werden. Mit einer solchen Entfaltung lassen sich die Bildauflösung und das Signal-zu-Rausch-Verhältnis steigern.

Unter dem Begriff "Einzelbild" ist im Kontext der oben beschriebenen Ausführungsformen ein Scanbild zu verstehen, das Pixel aufweist, die verschiedenen Scanpositionen des Fokus des Beleuchtungslichts in der Probe zugeordnet sind, wobei die Pixelintensitäten die von dem einzelnen Detektorelement für die entsprechenden Scanpositionen erfassten Lichtemissionen sind. Das jeweilige Detektorelement wird also in diesem Fall zunächst wie ein Einzeldetektor ausgelesen, wobei die Aufnahme abhängig von der Relativposition und der Position des entsprechenden Detektorelements in der Detektionsebene konfokal oder nicht-konfokal sein kann.

Gemäß einer weiteren Ausführungsform umfasst die erste Scanvorrichtung einen elektrooptischen oder akustooptischen Deflektor. Solche Scanvorrichtungen weisen eine besonders hohe Geschwindigkeit auf und sind daher insbesondere für die hier beschriebenen Anwendungen, wie die Korrektur einer langsameren Scanvorrichtung, die Ausführung von Sprüngen und das Ansteuern der Beleuchtungspositionen bei der MINFLUX-Mikroskopie geeignet.

Gemäß einer weiteren Ausführungsform umfasst die zweite Scanvorrichtung einen mechanischen Scanner, insbesondere einen Galvanometerscanner. Mechanische Scanner sind relativ einfach aufgebaut und weisen oft ein vergleichsweise großes Bildfeld auf. Jedoch ist insbesondere durch die Trägheit der mechanischen Komponenten die Geschwindigkeit dieser Scanner begrenzt. Daher lassen sie sich gut mit schnelleren Scanvorrichtungen wie elektrooptischen und akustooptischen Scanvorrichtungen kombinieren.

Gemäß einer weiteren Ausführungsform weist die Detektionsebene eine Größe auf, die (unter Berücksichtigung des Abbildungsmaßstabs) mindestens dem Durchmesser einer Airy-Scheibe des aus der Probe in die Detektionsebene abgebildeten Emissionslichts entspricht. Auf diese Weise kann die gesamte Detektionspunktspreizfunktion des Emissionslichts auf den Detektor abgebildet werden. Insbesondere entspricht die Größe der Detektionsebene mindestens dem 1,2-Fachen, weiter insbesondere mindestens dem 1,5-Fachen, noch weiter insbesondere dem Zweifachen des Durchmessers der Airy-Scheibe. Je größer der Bereich ist, der in die Detektionsebene abgebildet wird, desto größer kann die durch die Ablenkung mit der ersten Scanvorrichtung verursachte Verschiebung der Relativposition zwischen der Fokusposition des Beleuchtungslichts und dem Zentrum der Projektion der Detektionsebene in die Probe sein, die bei der Auswertung berücksichtigt wird. Dies erlaubt eine flexiblere Verwendung der ersten Scanvorrichtung.

Gemäß einer weiteren Ausführungsform wird das Emissionslicht mit einem in dem Detektionsstrahlengang angeordneten Ablenkelement (z.B. aufweisend einen piezoelektrischen Tip-Tilt-Aktuator) abgelenkt, um das Emissionslicht auf einen bestimmten Bereich der Detektionsebene abzubilden.

Idealerweise sollte die Detektionsebene so groß sein, dass sie den gesamten Auslenkungsbereich der ersten Scanvorrichtung abdeckt, so dass das Emissionslicht immer in die Detektionsebene abgebildet wird. Bei der Verwendung aktuell erhältlicher Array-Detektoren ist es jedoch insbesondere notwendig, Kompromisse zwischen Parametern wie Größe, Pixelierung, Geschwindigkeit, Dunkelzählrate o.Ä. einzugehen. Daher erlaubt die Ablenkung des Emissionslichts durch das Ablenkelement eine größere Flexibilität bezüglich der verwendbaren Array-Detektoren.

Gemäß einer weiteren Ausführungsform wird die Probe mit der ersten Scanvorrichtung und/oder der zweiten Scanvorrichtung mit dem Fokus des Beleuchtungslichts gescannt, wobei auf Basis der Auswertung der Detektionssignale ein Scanbild der Probe bestimmt wird. Bei dem Scanbild entsprechen die Pixel verschiedenen Scanpositionen des Fokus des Beleuchtungslichts in der Probe. Es kann also z.B. ein Bild nach dem Prinzip der Laserscanning-Mikroskopie, Image Scanning-Mikroskopie und/oder der STED-Mikroskopie aufgenommen werden. Bei der STED-Mikroskopie wird, wie oben erwähnt, die Probe mit einer Kombination eines Anregungslicht-Fokus und einer Intensitätsverteilung von STED-Licht mit einem lokalen Intensitätsminimum gescannt.

Insbesondere wird das Scanbild durch Scannen der Probe mit einer Kombination der ersten Scanvorrichtung und der zweiten Scanvorrichtung aufgenommen.

Gemäß einer weiteren Ausführungsform wird die Probe mit dem Fokus mittels der ersten Scanvorrichtung und/oder der zweiten Scanvorrichtung so gescannt, dass sich für unterschiedliche Scanpixel unterschiedliche Pixelverweilzeiten ergeben, insbesondere bei konstanter Detektorintegrationszeit. Der Begriff "Pixelverweilzeit" beschreibt dabei die Zeitdauer, über die das Detektorsignal integriert wird, um die Pixelintensität für einen Pixel zu erhalten. Sie ergibt sich aus der Scangeschwindigkeit (Geschwindigkeit des Fokus des Beleuchtungslichts relativ zur Probe) und der Detektorintegrationszeit. Mit anderen Worten ändert sich also die Scangeschwindigkeit über das Bildfeld. Die unterschiedliche Scangeschwindigkeit kann ein unerwünschter Nebeneffekt der entsprechenden Scanvorrichtung (insbesondere der zweiten Scanvorrichtung) sein, der insbesondere mit der ersten Scanvorrichtung korrigiert werden kann oder die unterschiedliche Scangeschwindigkeit kann erwünscht sein, z.B. um mit der ersten Scanvorrichtung Sprünge des Beleuchtungslicht-Fokus auszuführen.

Eine Konsequenz unterschiedlicher Pixelverweilzeiten ist insbesondere, dass sich Positionsfehler einer Scanvorrichtung, insbesondere der zweiten Scanvorrichtung, als Bildartefakte niederschlagen können. Solche Positionsfehler können dann vorteilhafterweise mit der ersten Scanvorrichtung korrigiert werden, ohne eine Einbuße der Signalstärke und/oder Signalqualität hinnehmen zu müssen.

Gemäß einer weiteren Ausführungsform wird der Fokus des Beleuchtungslichts von der ersten Scanvorrichtung und der zweiten Scanvorrichtung so abgelenkt, dass der Fokus des Beleuchtungslichts während der Pixelverweilzeit an einer Scanposition stillsteht und nach Ablauf der Pixelverweilzeit sprunghaft an eine weitere Scanposition verlagert wird. Dies kann z.B. ermöglicht werden, indem die Scanposition mit der ersten Scanvorrichtung und der zweiten Scanvorrichtung angesteuert wird, wobei eine Abweichung zwischen einem Sollzustand und einem Istzustand der zweiten Scanvorrichtung (insbesondere eine Abweichung zwischen einer Soll- und Istposition optischer Elemente wie Galvospiegel) während einer Einschwingzeit von der ersten Scanvorrichtung korrigiert wird. Dabei weist die erste Scanvorrichtung insbesondere eine höhere Geschwindigkeit auf als die zweite Scanvorrichtung. Bei der ersten Scanvorrichtung kann es sich z.B. um eine elektrooptische oder akustooptische Scanvorrichtung handeln und bei der zweiten Scanvorrichtung kann es sich z.B. um eine mechanische Scanvorrichtung wie eine Galvanometerscanvorrichtung handeln. Durch die erfindungsgemäße Berücksichtigung der Relativposition wird sichergestellt, dass die Aufnahme des Scanbildes trotz der Korrektur durch die erste Scanvorrichtung stets konfokal erfolgt.

Gemäß einer weiteren Ausführungsform wird während eines Scans der Probe an einem ersten Scanpixel mittels der zweiten Scanvorrichtung überprüft, ob von den Detektorelementen erfasstes Emissionslicht innerhalb eines Teilintervalls einer Pixelverweilzeit des ersten Scanpixels eine Lichtschwelle überschreitet oder unterschreitet, wobei der Fokus des Beleuchtungslichts bei einem Überschreiten oder Unterschreiten der Lichtschwelle mittels der ersten Scanvorrichtung an eine Position eines weiteren Scanpixels verschoben wird.

Bei dieser Ausführungsform wird ein sogenanntes Pixel Hopping adaptiv in Abhängigkeit der Probenstruktur implementiert, insbesondere um die Probe in besonders interessanten Bereichen zu schonen, z.B. vor Fotobleichen oder (im Fall einer Probe mit lebenden Zellen) Fototoxizität. Diese im Stand der Technik beschriebene Technik ist eine Variation von Techniken wie CLEM (*controlled light exposure microscopy),* RESCUE (*reduction of state transition cycles*) oder DYMIN (*dynamic intensity minimum),* bei denen die Intensität des Beleuchtungslichts in Abhängigkeit der Probenstruktur adaptiv angepasst wird, um die Probe zu schonen, hat allerdings den zusätzlichen Vorteil, dass auch insgesamt eine schnellere Bildaufnahme ermöglicht wird.

Das Verfahren gemäß der vorliegenden Erfindung hat in diesem Zusammenhang den speziellen Vorteil, dass für das *Pixel Hopping* besonders gut geeignete schnelle Scanvorrichtungen wie elektrooptische oder akustooptische Deflektoren verwendet werden können, ohne das Emissionslicht unter Signalverlust durch diese entscannen zu müssen.

Gemäß einer weiteren Ausführungsform variieren Scangeschwindigkeiten der ersten und der zweiten Scanvorrichtung über einen Scanbereich hinweg, wobei insgesamt aber eine Verlagerung des Fokus des Beleuchtungslichts in der Probe mit einer über den Scanbereich konstanten Geschwindigkeit erfolgt.

Hierbei kann die erste Scanvorrichtung z.B. Positionsfehler der zweiten Scanvorrichtung korrigieren, so dass insgesamt eine Scankurve mit homogen über das Bildfeld verteilten Pixelintegrationszeiten ermöglicht wird. Dies ist von besonderer Bedeutung, wenn es sich bei der zweiten Scanvorrichtung um eine mechanische Scanvorrichtung, wie eine Galvanometerscanvorrichtung, und bei der ersten Scanvorrichtung um eine schnellere Scanvorrichtung, wie eine elektrooptische oder akustooptische Scanvorrichtung handelt.

Gemäß einer weiteren Ausführungsform wird auf Basis der Auswertung der Detektionssignale mindestens eine Position eines vereinzelten Emitters in der Probe bestimmt, indem eine an dem Fokus des Beleuchtungslichts in der Probe gebildete Intensitätsverteilung des Beleuchtungslichts mit einem lokalen Intensitätsminimum, insbesondere einer Intensitätsnullstelle, von der ersten Scanvorrichtung und/oder der zweiten Scanvorrichtung an Beleuchtungspositionen eines Beleuchtungsmusters um eine erste geschätzte Position des vereinzelten Emitters verlagert wird, und wobei auf Basis von für die verschiedenen Beleuchtungspositionen erfassten Detektionssignalen der Detektorelemente mindestens eine weitere geschätzte Position des vereinzelten Emitters mit im Vergleich zu der ersten geschätzten Position verbesserter Genauigkeit bestimmt wird.

Das heißt, es handelt sich bei dem Verfahren gemäß der zuletzt beschriebenen Ausführungsform um ein MINFLUX-Verfahren nach der hier geltenden Definition. Das Beleuchtungslicht ist dabei insbesondere Anregungslicht, kann jedoch auch STED-Licht sein, das zusätzlich zu fokussiertem Anregungslicht auf die Probe eingestrahlt wird.

Der Detektor ist hierbei insbesondere dazu ausgebildet, einzelne Photonen zu erfassen. Ein Detektor mit mehreren Detektorelementen, die zur Einzelphotonendetektion geeignet sind, ist z.B. ein sogenanntes APD-Array.

Die erste geschätzte Position des vereinzelten Emitters kann mit einer unabhängigen Methode bestimmt werden, z.B. durch einen Rasterscan mit einem Anregungslichtfokus, durch sogenanntes *Pinhole Orbit Scanning* oder durch Weitfeldmikroskopie, oder auch dadurch, dass aktivierbare Emitter in einem räumlich eng begrenzten Bereich mit Aktivierungslicht beaufschlagt werden.

Die Beleuchtungspositionen des Beleuchtungsmusters können schrittweise nacheinander angesteuert werden, insbesondere mit der ersten Scanvorrichtung, bei der es sich z.B. um eine elektrooptische oder akustooptische Scanvorrichtung handeln kann. Dabei können die während einer Verweilzeit an der jeweiligen Beleuchtungsposition erfassten Lichtemissionen der Beleuchtungsposition zugeordnet werden. Alternativ kann die Intensitätsverteilung auch kontinuierlich über die Beleuchtungspositionen bewegt werden, z.B. mit der zweiten Scanvorrichtung, bei der es sich z.B. um eine Galvanometer-Scanvorrichtung handeln kann. Dabei kann insbesondere für jedes erfasste Photon die zugehörige Beleuchtungsposition ermittelt werden, also diejenige Position, an der sich das Minimum zum Zeitpunkt der Erfassung bzw. Registrierung des Photons befunden hat. Die kontinuierliche Bewegung kann z.B. auf einer Kreisbahn ausgeführt werden oder auch auf nichtkreisförmigen Bahnen wie z.B. Lissajous-Figuren, Hypotrochoiden, Epitrochoiden oder ähnlichen Bahnen.

Die weitere geschätzte Position kann z.B. mittels eines *Maximum-Likelihood-Schätzers* oder einer Vektorsumme (äquivalent zu einem Least-Mean-Square-Schätzer) berechnet werden. Der Positionsschätzer kann dabei für bestimmte Messbedingungen kalibriert sein.

Bei der Positionsschätzung können die für eine Beleuchtungsposition von den einzelnen Detektorelementen erfassten Detektionssignale einfach aufsummiert werden oder es kann z.B. eine gewichtete Summe der Detektionssignale mit Gewichten von 0 bis 1 ermittelt werden, insbesondere wobei die Gewichte abhängig von der Position des jeweiligen Detektorelements in der Detektionsebene festgelegt werden können.

Insbesondere kann das Verfahren iterativ durchgeführt werden, indem das lokale Intensitätsminimum des Beleuchtungslichts an Beleuchtungspositionen um die im vorhergehenden Schritt ermittelte weitere geschätzte Position angeordnet werden und Lichtemissionen des vereinzelten Emitters erfasst werden, wobei dasselbe Beleuchtungsmuster oder ein angepasstes Beleuchtungsmuster (insbesondere mit kleinerer Erstreckung und erhöhter Lichtintensität) verwendet werden kann. Dieser Vorgang kann insbesondere so lange wiederholt werden, bis die Genauigkeit der Positionsbestimmung konvergiert oder bis der zu lokalisierende Emitter aufhört Licht zu emittieren.

Gemäß einer weiteren Ausführungsform wird das lokale Intensitätsminimum der Intensitätsverteilung des Beleuchtungslichts mittels der ersten Scanvorrichtung an den Beleuchtungspositionen angeordnet, wobei die Detektionssignale der einzelnen Detektorelemente für unterschiedliche Beleuchtungspositionen auf Basis der ermittelten Relativposition zwischen der Fokusposition des Beleuchtungslichts in der Probe und dem Zentrum der Projektion der Detektionsebene in die Probe unterschiedlich gewichtet werden, und wobei die mindestens eine weitere geschätzte Position auf Basis der gewichteten Detektionssignale bestimmt wird. Die Gewichte können dabei insbesondere reelle Zahlen von 0 bis 1 sein.

Auf diese Weise können Positionsschätzungsfehler, die durch Abweichungen von der Konfokalität abhängig von der Ablenkung des Beleuchtungslichts durch die erste Scanvorrichtung ohne Entscannen des Emissionslichts durch die erste Scanvorrichtung zustande kommen, reduziert werden.

Gemäß einer weiteren Ausführungsform wird das Zentrum der Projektion der Detektionsebene in die Probe mit der zweiten Scanvorrichtung vor dem Verlagern der Intensitätsverteilung an die Beleuchtungspositionen an die erste geschätzte Position des vereinzelten Emitters verschoben.

Auf diese Weise korrespondiert das Zentrum des Bildfeldes insbesondere mit dem Zentrum des Beleuchtungsmusters. Dadurch hat die Abweichung von der Konfokalität für alle Beleuchtungspositionen den gleichen Betrag (aber unterschiedliche Richtungen), was insbesondere die Gewichtung der Detektorsignale erleichtern kann.

Gemäß einer weiteren Ausführungsform werden auf Basis der Auswertung die Positionen eines ersten vereinzelten Emitters und eines zweiten vereinzelten Emitters bestimmt, indem die Intensitätsverteilung von der ersten Scanvorrichtung an Beleuchtungspositionen um erste geschätzte Positionen des ersten Emitters und/oder des zweiten Emitters verlagert wird, und wobei auf Basis von für die verschiedenen Beleuchtungspositionen erfassten Detektionssignalen der Detektorelemente mindestens eine weitere geschätzte Position des ersten Emitters und des zweiten Emitters mit im Vergleich zu der ersten geschätzten Position verbesserter Genauigkeit bestimmt wird.

Unter bestimmten Umständen kann es möglich sein, zwei verschiedene Emitter mit einem MINFLUX-Verfahren parallel zu lokalisieren. Zunächst könnten die Emitter einen Abstand oberhalb der Beugungsgrenze aufweisen und es könnten jeweilige Beleuchtungsmuster für den ersten Emitter und den zweiten Emitter vorgesehen sein, zwischen denen mit der ersten Scanvorrichtung hin und her gesprungen wird. Hierbei ist die vorliegende Erfindung insofern vorteilhaft, dass die dann bei stationärem Bildfeld (also ruhender zweiter Scanvorrichtung) auftretenden Abweichungen von der Konfokalität durch die Auslenkung mit der nichtentscannenden ersten Scanvorrichtung relativ groß sind und daher mehr als bei anderen MINFLUX-Verfahren zu Lokalisierungsfehlern beitragen. Durch eine unterschiedliche Gewichtung der Detektionssignale der einzelnen Detektorelemente abhängig von der ermittelten Relativposition, welche sich für die beiden verschiedenen Beleuchtungsmuster relativ stark unterscheidet, kann dieser Fehler mit dem erfindungsgemäßen Verfahren korrigiert werden.

In manchen Fällen können der erste und der zweite Emitter auch parallel lokalisiert werden, wenn sie einen Abstand unterhalb der Beugungsgrenze aufweisen, etwa wenn es Emitter mit unterschiedlichen Emissionsspektren oder Emissionslebensdauern sind oder wenn sie asynchron blinken.

Gemäß einer weiteren Ausführungsform wird das Zentrum der Projektion der Detektionsebene in der Probe mit der zweiten Scanvorrichtung an einer Position zwischen der ersten geschätzten Position des ersten Emitters und der ersten geschätzten Position des zweiten Emitters, insbesondere an einem Mittelpunkt zwischen der ersten geschätzten Position des ersten Emitters und der ersten geschätzten Position des zweiten Emitters, positioniert.

Dies hat den Vorteil, dass die Abweichungen von der Konfokalität für Beleuchtungspositionen um den ersten Emitter und Beleuchtungspositionen um den zweiten Emitter eine ähnliche Größenordnung haben. Dies erleichtert die unterschiedliche Gewichtung der Detektionssignale.

Gemäß einer weiteren Ausführungsform wird auf Basis von mittels der Detektorelemente erfassten Detektionssignalen ein Hintergrundwert bestimmt, wobei die weitere geschätzte Position auf Basis des Hintergrundwertes korrigiert wird. Insbesondere kann auf Basis der ermittelten Relativposition mindestens ein Detektorelement ausgewählt werden, auf Basis von dessen Detektionssignal der Hintergrundwert bestimmt wird.

Beispielsweise kann dabei ein Detektorelement ausgewählt werden, der außerhalb eines Bereichs liegt, auf den die Detektionspunktspreizfunktion eines einzelnen Emitters abgebildet wird. Von diesem Detektorelement erfasstes Licht ist dann mit hoher Wahrscheinlichkeit Hintergrundlicht.

Gemäß einer weiteren Ausführungsform wird auf Basis des bestimmten Hintergrundwertes ein Durchmesser einer synthetischen Lochblende angepasst.

Die synthetische Lochblende kann wie oben erläutert realisiert werden, indem die Detektorelemente in mindestens zwei Gruppen eingeteilt werden, von denen eine Gruppe von einer anderen Gruppe umschlossen wird, und wobei die Detektionssignale der äußeren Gruppe nicht oder mit einem geringeren Gewicht, zur Positionsschätzung beitragen. Durch die synthetische Lochblende kann Hintergrundlicht ausgeblendet werden, was zu einer Verbesserung der Positionsschätzung führt. Abhängig von der (ggf. örtlich in der Probe oder zeitlich veränderlichen) Intensität des Hintergrundlichts kann die Größe der synthetischen Lochblende angepasst werden, um mehr oder weniger Hintergrundlicht auszublenden.

Zusätzlich kann mindestens ein Detektorelement, dessen Detektionssignal aufgrund der synthetischen Lochblende nicht für die Positionsschätzung verwendet wird, zur weiteren Messung des Hintergrunds verwendet werden, um eine Hintergrundkorrektur durchzuführen.

Gemäß einer weiteren Ausführungsform wird das Intensitätsminimum der Intensitätsverteilung des Beleuchtungslichts mit der zweiten Scanvorrichtung an eine neue Position in der Probe verlagert, wobei ein Positionsfehler der zweiten Scanvorrichtung in einem Zeitintervall während und/oder nach der Verlagerung an die neue Position mittels der ersten Scanvorrichtung korrigiert wird.

Insbesondere dann, wenn die zweite Scanvorrichtung eine mechanische Scanvorrichtung, wie eine Galvanometerscanvorrichtung ist, kann nach schnellen Sprüngen an neue Probenpositionen, wie sie z.B. nach Abschluss einer Lokalisation eines Emitters bei der Ansteuerung der Position eines neuen Emitters bei einem MINFLUX-Verfahren erforderlich sein können, z.B. ein Nachschwingen der optischen Elemente, wie z.B. Galvospiegel, auftreten. Vorteilhafterweise können solche Positionsfehler mit der ersten Scanvorrichtung, z.B. einer elektrooptischen oder akustooptischen Scanvorrichtung, korrigiert werden, so dass die erforderliche Wartezeit bis zum Beginn der nächsten Beleuchtungssequenz zur Lokalisierung eines Emitters reduziert werden kann.

Ein zweiter Aspekt der Erfindung betrifft ein Lichtmikroskop umfassend eine Beleuchtungsoptik, die dazu ausgebildet ist, eine Probe über einen Beleuchtungsstrahlengang des Lichtmikroskops mit Beleuchtungslicht zu beleuchten und einen Fokus des Beleuchtungslichts in der Probe zu erzeugen, einen in einem teilweise mit dem Beleuchtungsstrahlengang zusammenfallenden Detektionsstrahlengang des Lichtmikroskops angeordneten Detektor umfassend eine Mehrzahl von in einer Detektionsebene angeordneten Detektorelementen, die dazu ausgebildet sind, von Emittern in der Probe ausgehendes Emissionslicht zu erfassen, wobei die Detektionsebene eine Bildebene bezüglich einer Fokusebene in der Probe ist, in welcher der Fokus des Beleuchtungslichts angeordnet ist, und eine erste Scanvorrichtung und eine zweite Scanvorrichtung, die jeweils dazu ausgebildet sind, den Fokus des Beleuchtungslichts in der Probe zu verlagern, wobei die ersten Scanvorrichtung und die zweite Scanvorrichtung hintereinander in dem Beleuchtungsstrahlengang angeordnet sind, und wobei die zweite Scanvorrichtung in dem gemeinsamen Beleuchtungsstrahlengang und Detektionsstrahlengang angeordnet ist, während die erste Scanvorrichtung nur in dem Beleuchtungsstrahlengang angeordnet ist, so dass das Emissionslicht nur von der zweiten Scanvorrichtung entscannt wird.

Das Lichtmikroskop weist eine Recheneinheit auf, die dazu ausgebildet ist, eine von einer Ablenkung des Beleuchtungslichts durch die erste Scanvorrichtung und die zweite Scanvorrichtung sowie eine Ablenkung des Emissionslichts durch die zweite Scanvorrichtung abhängige Relativposition zwischen einem Zentrum einer Projektion der Detektionsebene in die Probe und einer Fokusposition des Beleuchtungslichts in der Probe zu ermitteln und von den Detektorelementen erfasste Detektionssignale unter Berücksichtigung der ermittelten Relativposition auszuwerten.

Die Recheneinheit ist logischer Bestandteil der Beleuchtungs- und Detektionsvorrichtung, muss jedoch nicht physisch mit dieser verbunden sein, sondern kann z.B. auch auf einem Cloud-Server implementiert sein.

Das Lichtmikroskop ist insbesondere dazu ausgebildet, das Verfahren nach dem ersten Aspekt durchzuführen.

Ein dritter Aspekt der Erfindung betrifft eine Beleuchtungs- und Detektionsvorrichtung für ein Lichtmikroskop umfassend einen ersten Anschluss, der dazu ausgebildet ist, die Beleuchtungs- und Detektionsvorrichtung mit einem Lichtmikroskop zu verbinden, einen zweiten Anschluss, der dazu ausgebildet ist, Beleuchtungslicht in einen Beleuchtungsstrahlengang der Beleuchtungs- und Detektionsvorrichtung einzukoppeln, einen Detektor umfassend eine Mehrzahl von in einer Detektionsebene angeordneten Detektorelementen, die dazu ausgebildet sind, von Emittern in einer Probe ausgehendes Emissionslicht zu erfassen, wobei die Detektionsebene eine Bildebene bezüglich einer Fokusebene in der Probe ist, in welcher der Fokus des Beleuchtungslichts angeordnet ist, zumindest eine erste Scanvorrichtung, die dazu ausgebildet ist, den Fokus des Beleuchtungslichts in der Probe zu verlagern, wobei die erste Scanvorrichtung nur in dem Beleuchtungsstrahlengang, nicht aber in dem Detektionsstrahlengang angeordnet ist, so dass das Emissionslicht nicht von der ersten Scanvorrichtung entscannt wird, eine Recheneinheit, die dazu ausgebildet ist, eine von einer Ablenkung des Beleuchtungslichts durch die erste Scanvorrichtung abhängige Relativposition zwischen einem Zentrum einer Projektion der Detektionsebene in die Probe und einer Fokusposition des Beleuchtungslichts in der Probe zu ermitteln und von den Detektorelementen erfasste Detektionssignale unter Berücksichtigung der ermittelten Relativposition auszuwerten.

Die Recheneinheit ist logischer Bestandteil der Beleuchtungs- und Detektionsvorrichtung, muss jedoch nicht physisch mit dieser verbunden sein, sondern kann z.B. auch auf einem Cloud-Server implementiert sein.

Die Beleuchtungs- und Detektionsvorrichtung ist insbesondere dazu ausgebildet, das Verfahren nach dem ersten Aspekt durchzuführen.

Gemäß einer Ausführungsform umfasst die Beleuchtungs- und Detektionsvorrichtung eine zweite Scanvorrichtung, die dazu ausgebildet ist, den Fokus des Beleuchtungslichts in der Probe zu verlagern, wobei die erste Scanvorrichtung und die zweite Scanvorrichtung hintereinander in dem Beleuchtungsstrahlengang der Beleuchtungs- und Detektionsvorrichtung angeordnet ist, und wobei die zweite Scanvorrichtung in einem gemeinsamen Beleuchtungsstrahlengang und Detektionsstrahlengang angeordnet ist, so dass das Emissionslicht von der zweiten Scanvorrichtung entscannt wird.

Alternativ dazu kann die zweite Scanvorrichtung Bestandteil des Lichtmikroskops sein, an das die Beleuchtungs- und Detektionsvorrichtung mit dem ersten Anschluss anschließbar ist.

Ein vierter Aspekt der Erfindung betrifft ein Computerprogramm aufweisend Befehle, die das Lichtmikroskop nach dem zweiten Aspekt oder die Beleuchtungs- und Detektionsvorrichtung nach dem dritten Aspekt dazu veranlassen, das Verfahren nach dem ersten Aspekt durchzuführen.

Weitere Merkmale und Vorteile des Lichtmikroskops nach dem zweiten Aspekt, der Beleuchtungs- und Detektionsvorrichtung nach dem dritten Aspekt und des Computerprogramms nach dem vierten Aspekt ergeben sich aus der Beschreibung des Verfahrens nach dem ersten Aspekt.

Vorteilhafte Weiterbildungen der Erfindung ergeben sich aus den Patentansprüchen, der Beschreibung und den Zeichnungen und den zugehörigen Erläuterungen zu den Zeichnungen.

Die beschriebenen Vorteile von Merkmalen und / oder Merkmalskombinationen der Erfindung sind lediglich beispielhaft und können alternativ oder kumulativ zur Wirkung kommen.

Hinsichtlich des Offenbarungsgehalts (aber nicht des Schutzbereichs) der ursprünglichen Anmeldungsunterlagen und des Patents gilt Folgendes: Weitere Merkmale sind den Zeichnungen - insbesondere den dargestellten relativen Anordnungen und Wirkverbindungen - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

Im Folgenden werden Ausführungsbeispiele der Erfindung anhand von Figuren beschrieben. Diese beschränken nicht den Gegenstand dieser Offenbarung und den Schutzumfang.

### Kurzbeschreibung der Figuren

- Fig. 1: zeigt ein Ausführungsbeispiel eines erfindungsgemäßen Lichtmikroskops;
- Fig. 2: zeigt schematisch die Projektion der Detektionsebene in die Probe zur Veranschaulichung des erfindungsgemäßen Verfahrens;
- Fig. 3: zeigt ein Ausführungsbeispiel einer erfindungsgemäßen Beleuchtungs- und Detektionsvorrichtung.

### Beschreibung der Figuren

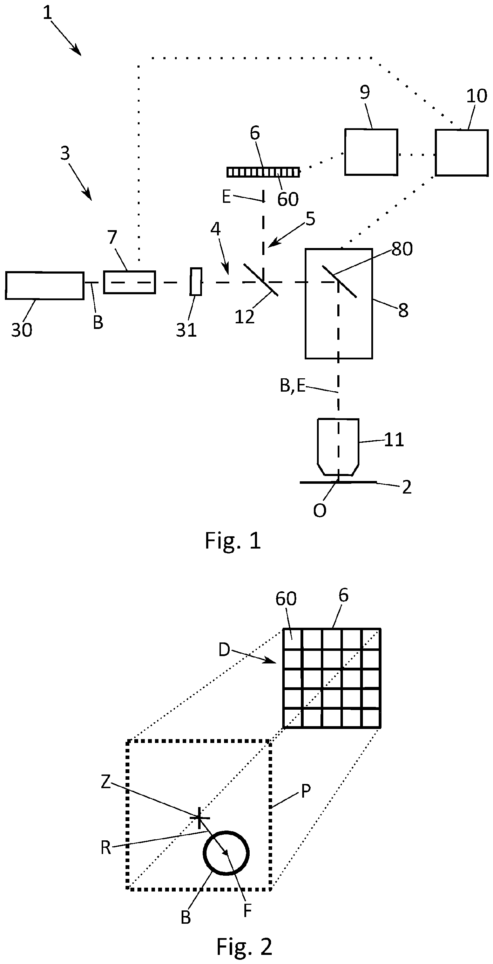

**Fig. 1** zeigt ein Lichtmikroskop 1, das zur Abbildung einer mit Emittern markierten Probe 2 mittels Rastermikroskopie (insbesondere Laserscanning-Mikroskopie) und/oder zur Lokalisierung und/oder zum Verfolgen vereinzelter Emitter in der Probe 2 nach einem MINFLUX-Verfahren ausgebildet sein kann.

Das Lichtmikroskop 1 weist eine Beleuchtungsoptik 3 zur Beleuchtung der Probe 2 mit Beleuchtungslicht B, insbesondere Anregungslicht, auf, wobei die Beleuchtungsoptik 3 gemäß dem dargestellten Beispiel eine Lichtquelle 30 und einen optionalen Lichtmodulator 31 zur räumlichen Modulation der Amplituden- und/oder Phasenverteilung des Beleuchtungslichts B umfasst. Der Lichtmodulator 31 wird für die Lokalisation und Verfolgung von vereinzelten Emittern mit einem MINFLUX-Verfahren benötigt, um eine Intensitätsverteilung des Beleuchtungslichts B mit einem lokalen Intensitätsminimum, z.B. einen Donut oder einen *Bottle Beam,* in der Probe 2 zu erzeugen, ist aber nicht erforderlich, wenn das Lichtmikroskop 1 für die Abbildung mittels Rastermikroskopie verwendet wird. Das Beleuchtungslicht B beleuchtet die Probe 2 über einen Beleuchtungsstrahlengang 4, der zwischen der Lichtquelle 30 und dem Objektiv 11 verläuft.

Gemäß einer Variante kann die Beleuchtungsoptik 3 auch eine weitere Lichtquelle zur Erzeugung von Verhinderungslicht, z.B. STED-Licht aufweisen, das z.B. über einen weiteren Strahlteiler in den Beleuchtungsstrahlengang 4 eingekoppelt und mit dem Anregungslicht kombiniert wird (nicht gezeigt). In diesem Fall kann sich im Strahlengang des Verhinderungslichts ebenfalls ein Lichtmodulator zur räumlichen Modulation der Amplituden- und/oder Phasenverteilung des Beleuchtungslichts befinden, um in der Probe eine Intensitätsverteilung des Verhinderungslichts mit einem lokalen Intensitätsminimum, z.B. einen Donut oder einen *Bottle Beam,* zu erzeugen.

Der Beleuchtungsstrahlengang 4 ist mittels eines Strahlteilers 12 von einem Detektionsstrahlengang 5 getrennt, in dem sich ein Detektor 6 mit mehreren, in einer Detektionsebene D (siehe **Fig. 2**) angeordneten Detektorelementen 60, z.B. ein APD-Array, befindet.

Das Lichtmikroskop 1 weist eine erste Scanvorrichtung 7, insbesondere umfassend mindestens einen elektrooptischen oder akustooptischen Modulator, und eine zweite, insbesondere mechanische Scanvorrichtung 8, z.B. eine galvanometrische Scanvorrichtung, auf, wobei die zweite Scanvorrichtung 8 mindestens ein bewegliches optisches Element 80 (z.B. einen Galvanometerspiegel) zur Ablenkung des Beleuchtungslichts B aufweist. Beide Scanvorrichtungen 7,8 sind mit einer Steuereinheit 10 verbunden und dazu ausgebildet, das Beleuchtungslicht B unabhängig voneinander abzulenken, wenn von der Steuereinheit 10 entsprechende Positionssignale an die jeweilige Scanvorrichtung 7 oder 8 übertragen werden.

Das Beleuchtungslicht B läuft über den Beleuchtungsstrahlengang 4 von der Lichtquelle 30 über die erste Scanvorrichtung 7, den optionalen Lichtmodulator 31, den Strahlteiler 12 und die zweite Scanvorrichtung 8 zu dem Objektiv 11, welches das Beleuchtungslicht B in die Probe 2 fokussiert.

In der Probe 2 von dem Beleuchtungslicht B oder weiterem Anregungslicht angeregte Emitter senden Emissionslicht E aus, das von dem Objektiv 11 gebündelt wird und über den Detektionsstrahlengang 5, d.h. von dem Objektiv 11 über die zweite Scanvorrichtung 8, zu dem Strahlteiler 12, der das Emissionslicht reflektiert und von dem Strahlteiler 12 zu dem Detektor 6 gelangt.

Die Detektorelemente 60 des Detektors 6 erfassen das Emissionslicht E und erzeugen für die Detektorelemente 60 jeweilige Detektionssignale, die an eine Recheneinheit 9 übertragen werden.

Die Recheneinheit 9 kann aus den Detektionssignalen z.B. ein Rasterbild der Probe 2 berechnen oder aber im Fall eines MINFLUX-Verfahrens aus den für verschiedene Beleuchtungspositionen des lokalen Intensitätsminimums der Intensitätsverteilung des Beleuchtungslichts B in der Probe 2 erfassten Lichtemissionen eine Position eines vereinzelten Emitters in der Probe 2 schätzen.

Aus **Fig. 1** ist ersichtlich, dass der Beleuchtungsstrahlengang 4, über den das Beleuchtungslicht B von der Lichtquelle 30 zu dem Objektiv 11 gelangt, in dem Bereich zwischen dem Objektiv 11 und dem Strahlteiler 12 mit dem Detektionsstrahlengang 5, über den das Emissionslicht von dem Objektiv 11 zu dem Detektor 6 gelangt, zusammenfällt.

Die zweite Scanvorrichtung 8 befindet sich somit im gemeinsamen Beleuchtungsstrahlengang 4 und Detektionsstrahlengang 5. Die zweite Scanvorrichtung 8 scannt daher das Beleuchtungslicht B über die Probe 2 und entscannt das Emissionslicht E aus der Probe 2.

Die erste Scanvorrichtung 7 ist dagegen zwischen der Lichtquelle 30 und dem Strahlteiler 12 angeordnet, befindet sich also nur im Beleuchtungsstrahlengang 4, nicht aber im Detektionsstrahlengang 5. Dementsprechend wird das Beleuchtungslicht B zwar von der ersten Scanvorrichtung 7 über die Probe 2 gescannt, das Emissionslicht E wird jedoch nicht von der ersten Scanvorrichtung 7 entscannt.

Aufgrund dieses Aufbaus kann sich die in **Fig. 2** skizzierte Situation ergeben, wenn das Beleuchtungslicht B von der ersten Scanvorrichtung 7 abgelenkt wird.

**Fig. 2** zeigt den Detektor 6 mit den in der Detektionsebene D angeordneten Detektorelementen 60 und seine Projektion P (schematisch mit vereinfachtem Strahlengang ohne optische Komponenten dargestellt) in die Fokusebene in der Probe 2, in welcher der Fokus des Beleuchtungslichts B angeordnet ist. Der Fokus ist an der Fokusposition F in der Probe 2 positioniert.

In der dargestellten Situation fällt das Zentrum Z der Detektionsebene D (welche in diesem Beispiel der Position dem zentralen Detektorelement 60 in der dritten Zeile und der dritten Spalte des Detektorarrays entspricht) aufgrund der Ablenkung des Beleuchtungslichts B durch die erste Scanvorrichtung 7 und das fehlende Entscannen des Emissionslichts E durch die erste Scanvorrichtung 7 nicht mit der Fokusposition F zusammen. Die Relativposition R zwischen dem Zentrum Z und der Fokusposition F ist in **Fig. 2** durch einen Vektor dargestellt.

Erfindungsgemäß wird diese Abweichung von der Konfokalität bei der Auswertung der Detektionssignale der Detektorelemente 60 berücksichtigt, indem die Relativposition R von der Recheneinheit 9 ermittelt wird und in die Auswertung der Detektionssignale einfließt.

Dabei können z.B. die Detektionssignale von der Recheneinheit 9 so ausgewertet werden, dass mittels des Detektors 6 eine synthetische Lochblende realisiert wird, die Licht aus Ebenen über und unter der Fokusebene in der Probe 2 ausblendet und somit ein *Optical Sectioning* ermöglicht. Das Zentrum der synthetischen Lochblende, d.h. das Detektorelement 60 oder die Gruppe von Detektorelementen 60, die das Zentrum einer Teilfläche der Detektionsebene D bildet, in denen Detektionssignale der Detektorelemente 60 zum Messsignal betragen, kann dabei anhand der ermittelten Relativposition festgelegt werden. Eine weitere Möglichkeit ist eine Berechnung einer gewichteten Summe der Detektionssignale, wobei die Gewichte auf Basis der ermittelten Relativposition R festgelegt werden.

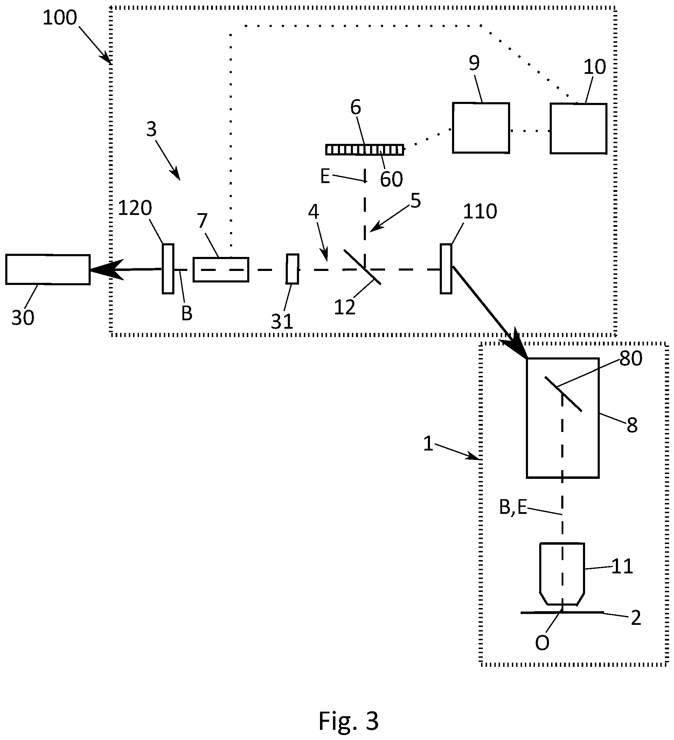

**Fig. 3** zeigt eine Ausführungsform einer erfindungsgemäßen Beleuchtungs- und Detektionsvorrichtung 100 mit einem ersten Anschluss 110 zum Anschließen an ein Lichtmikroskop 1 und einem zweiten Anschluss 120 zum Anschließen an ein eine Lichtquelle 30 zum Einkoppeln von Beleuchtungslicht B in einen Beleuchtungsstrahlengang 4 der Beleuchtungs- und Detektionsvorrichtung 100. Mit dem in **Fig. 1** gezeigten Lichtmikroskop 1 identische Komponenten sind mit denselben Bezugszeichen gekennzeichnet. Durch das Anschließen der zweiten Scanvorrichtung 8 des Lichtmikroskops 1 an den ersten Anschluss 110 und das Anschließen der Lichtquelle 30 an den zweiten Anschluss 120 wird der in **Fig. 1** dargestellte und oben beschriebene Aufbau realisiert.

Insbesondere der erste Anschluss 110 kann mit einem Lichteingang des Lichtmikroskops 1, z.B. einem sogenannten Port, verbunden werden, insbesondere so, dass der Anschluss 110 eine vorgegebene Orientierung des Strahlengangs der Beleuchtungs- und Detektionsvorrichtung 100 zu dem Lichtmikroskop 1 sicherstellt. Bei dem zweiten Anschluss 120 kann es sich z.B. um einen Faserkoppler handeln, der eine Laserquelle in den Beleuchtungsstrahlengang 4 der Beleuchtungs- und Detektionsvorrichtung 100 einkoppelt.

### Bezugszeichenliste

- 1: Lichtmikroskop
- 2: Probe
- 3: Beleuchtungsoptik
- 4: Beleuchtungsstrahlengang
- 5: Detektionsstrahlengang
- 6: Detektor
- 7: Erste Scanvorrichtung
- 8: Zweite Scanvorrichtung
- 9: Recheneinheit
- 10: Steuereinheit
- 11: Objektiv
- 12: Strahlteiler
- 30: Lichtquelle
- 31: Lichtmodulator
- 60: Detektorelement
- 80: Optisches Element
- 100: Beleuchtungs- und Detektionsvorrichtung
- 110: Erster Anschluss
- 120: Zweiter Anschluss
- B: Beleuchtungslicht
- D: Detektionsebene
- E: Emissionslicht
- F: Fokusposition
- P: Projektion
- O: Optische Achse
- R: Relativposition
- Z: Zentrum

## Patentansprüche

1. Lichtmikroskopisches Verfahren, wobei
- eine Probe (2) über einen Beleuchtungsstrahlengang (4) mit Beleuchtungslicht (4) beleuchtet wird, wobei ein Fokus des Beleuchtungslichts (B) in der Probe (2) erzeugt wird,
- wobei von Emittern in der Probe (2) ausgehendes Emissionslicht (E) über einen teilweise mit dem Beleuchtungsstrahlengang (4) zusammenfallenden Detektionsstrahlengang (5) zu einem Detektor (6) gelangt, wobei der Detektor (5) eine Mehrzahl von in einer Detektionsebene (D) angeordneten Detektorelementen (60) umfasst, die das Emissionslicht (E) erfassen, wobei die Detektionsebene (D) eine Bildebene bezüglich einer Fokusebene in der Probe (2) ist, in welcher der Fokus des Beleuchtungslichts (B) angeordnet ist,
- wobei in dem Beleuchtungsstrahlengang (4) hintereinander eine erste Scanvorrichtung (7) und eine zweite Scanvorrichtung (8) angeordnet sind, die jeweils dazu ausgebildet sind, den Fokus des Beleuchtungslichts (B) in der Probe (2) zu verlagern, und wobei die zweite Scanvorrichtung (8) in dem gemeinsamen Beleuchtungsstrahlengang (4) und Detektionsstrahlengang (5) angeordnet ist, während die erste Scanvorrichtung (7) nur in dem Beleuchtungsstrahlengang (4) angeordnet ist, so dass das Emissionslicht (E) nur von der zweiten Scanvorrichtung (8) entscannt wird,
**dadurch gekennzeichnet, dass** eine von einer Ablenkung des Beleuchtungslichts (B) durch die erste Scanvorrichtung (7) und die zweite Scanvorrichtung (8) sowie eine Ablenkung des Emissionslichts (E) durch die zweite Scanvorrichtung (8) abhängige Relativposition (R) zwischen einem Zentrum (Z) einer Projektion (P) der Detektionsebene (D) in die Probe (2) und einer Fokusposition (F) des Beleuchtungslichts (B) in der Probe (2) ermittelt wird, wobei von den Detektorelementen (60) erfasste Detektionssignale unter Berücksichtigung der ermittelten Relativposition (R) ausgewertet werden.

2. Verfahren nach Anspruch 1, **dadurch gekennzeichnet, dass** die Relativposition (R) auf Basis eines Positionssignal der ersten Scanvorrichtung (7) und/oder eines Positionssignals der zweiten Scanvorrichtung (8) bestimmt wird, insbesondere wobei die Relativposition (R) auf Basis eines Ist-Positionssignals der zweiten Scanvorrichtung (8) oder auf Basis einer Abweichung zwischen einem Soll-Positionssignal und einem Ist-Positionssignal der zweiten Scanvorrichtung (8) bestimmt wird oder auf Basis eines Soll-Positionssignals der zweiten Scanvorrichtung (8) geschätzt wird, weiter insbesondere wobei die erste Scanvorrichtung (7) auf Basis der Abweichung zwischen dem Soll-Positionssignal und dem Ist-Positionssignal der zweiten Scanvorrichtung (8) angesteuert wird, um die Fokusposition (F) zu korrigieren, noch weiter insbesondere wobei der Fokus des Beleuchtungslichts (B) mit der ersten Scanvorrichtung (7) mit einer höheren Geschwindigkeit abgelenkt wird als mit der zweiten Scanvorrichtung (8).

3. Verfahren nach Anspruch 1 oder 2, **dadurch gekennzeichnet, dass** an dem Fokus des Beleuchtungslichts (B) in der Probe (2) eine Intensitätsverteilung des Beleuchtungslichts (B) mit einem lokalen Intensitätsminimum, insbesondere einer Intensitätsnullstelle, gebildet wird.

4. Verfahren nach einem der vorhergehenden Ansprüche, **dadurch gekennzeichnet, dass** das Auswerten der von den Detektorelementen (60) erfassten Detektionssignale ein *Optical Sectioning* des Emissionslichts (E) durch eine synthetische Lochblende bewirkt, wobei ein Zentrum der synthetischen Lochblende auf Basis der bestimmten Relativposition (R) festgelegt wird.

5. Verfahren nach einem der vorhergehenden Ansprüche, **dadurch gekennzeichnet, dass** das Auswerten der von den Detektorelementen (60) erfassten Detektionssignale eine gewichtete Summenbildung der Detektionssignale umfasst.

6. Verfahren nach einem der vorhergehenden Ansprüche, **dadurch gekennzeichnet, dass** das Auswerten der von den Detektorelementen (60) erfassten Detektionssignale eine Verrechnung von von einzelnen Detektorelementen (60) aufgenommenen Scanbildern der Probe (2) umfasst, insbesondere durch ein *Pixel Reassignment* oder eine Bildentfaltung, insbesondere wobei auf Basis der ermittelten Relativposition (R) ein zentrales Detektorelement (60) oder eine zentrale Gruppe von Detektorelementen (60) bestimmt wird.

7. Verfahren nach einem der vorhergehenden Ansprüche, **dadurch gekennzeichnet, dass** die Detektionsebene (D) eine Größe aufweist, die mindestens dem Durchmesser einer Airy-Scheibe des aus der Probe (2) in die Detektionsebene (D) abgebildeten Emissionslichts entspricht.

8. Verfahren nach einem der Ansprüche 1 bis 7, **dadurch gekennzeichnet, dass** die Probe (2) mit der ersten Scanvorrichtung (7) und/oder der zweiten Scanvorrichtung (8) mit dem Fokus des Beleuchtungslichts (B) gescannt wird, wobei auf Basis der Auswertung der Detektionssignale ein Scanbild der Probe (2) bestimmt wird, insbesondere wobei die Probe mit dem Fokus mittels der ersten Scanvorrichtung (7) und/oder der zweiten Scanvorrichtung (8) so gescannt wird, dass sich für unterschiedliche Scanpixel unterschiedliche Pixelverweilzeiten ergeben oder wobei Scangeschwindigkeiten der ersten Scanvorrichtung (7) und der zweiten Scanvorrichtung (8) über einen Scanbereich hinweg variieren, insgesamt aber eine Verlagerung des Fokus des Beleuchtungslichts (B) in der Probe (2) mit einer über den Scanbereich konstanten Geschwindigkeit erfolgt, weiter insbesondere wobei während eines Scans der Probe (2) an einem ersten Scanpixel mittels der zweiten Scanvorrichtung (8) überprüft wird, ob von den Detektorelementen (60) erfasstes Emissionslicht (E) innerhalb eines Teilintervalls einer Pixelverweilzeit des ersten Scanpixels eine Lichtschwelle überschreitet oder unterschreitet, wobei der Fokus des Beleuchtungslichts (B) bei einem Überschreiten oder Unterschreiten der Lichtschwelle mittels der ersten Scanvorrichtung (7) an eine Position eines weiteren Scanpixels verschoben wird.

9. Verfahren nach einem der Ansprüche 1 bis 7, **dadurch gekennzeichnet, dass** auf Basis der Auswertung der Detektionssignale mindestens eine Position eines vereinzelten Emitters in der Probe (2) bestimmt wird, indem eine an dem Fokus des Beleuchtungslichts (B) in der Probe gebildete Intensitätsverteilung des Beleuchtungslichts (B) mit einem lokalen Intensitätsminimum, insbesondere einer Intensitätsnullstelle, von der ersten Scanvorrichtung (7) und/oder der zweiten Scanvorrichtung (8) an Beleuchtungspositionen eines Beleuchtungsmusters um eine erste geschätzte Position des vereinzelten Emitters verlagert wird, und wobei auf Basis von für die verschiedenen Beleuchtungspositionen erfassten Detektionssignalen der Detektorelemente (60) mindestens eine weitere geschätzte Position des vereinzelten Emitters mit im Vergleich zu der ersten geschätzten Position verbesserter Genauigkeit bestimmt wird, insbesondere wobei das lokale Intensitätsminimum der Intensitätsverteilung des Beleuchtungslichts (B) mittels der ersten Scanvorrichtung (7) an den Beleuchtungspositionen angeordnet wird, wobei die Detektionssignale der einzelnen Detektorelemente (60) für unterschiedliche Beleuchtungspositionen auf Basis der ermittelten Relativposition (R) zwischen der Fokusposition (F) des Beleuchtungslichts (B) in der Probe (2) und dem Zentrum (Z) der Projektion (P) der Detektionsebene (D) in die Probe (2) unterschiedlich gewichtet werden, und wobei die mindestens eine weitere geschätzte Position auf Basis der gewichteten Detektionssignale bestimmt wird, weiter insbesondere wobei das Zentrum (Z) der Projektion (P) der Detektionsebene (D) in die Probe (2) mit der zweiten Scanvorrichtung (8) vor dem Verlagern der Intensitätsverteilung an die Beleuchtungspositionen an die erste geschätzte Position des vereinzelten Emitters verschoben wird.

10. Verfahren nach Anspruch 9, **dadurch gekennzeichnet, dass** auf Basis der Auswertung die Positionen eines ersten vereinzelten Emitters und eines zweiten vereinzelten Emitters bestimmt werden, indem die Intensitätsverteilung von der ersten Scanvorrichtung (7) an Beleuchtungspositionen um erste geschätzte Positionen des ersten Emitters und/oder des zweiten Emitters verlagert wird, und wobei auf Basis von für die verschiedenen Beleuchtungspositionen erfassten Detektionssignalen der Detektorelemente (60) mindestens eine weitere geschätzte Position des ersten Emitters und des zweiten Emitters mit im Vergleich zu der ersten geschätzten Position verbesserter Genauigkeit bestimmt wird, insbesondere wobei das Zentrum (Z) der Projektion (P) der Detektionsebene (D) in der Probe (2) mit der zweiten Scanvorrichtung (8) an einer Position zwischen der ersten geschätzten Position des ersten Emitters und der ersten geschätzten Position des zweiten Emitters, insbesondere an einem Mittelpunkt zwischen der ersten geschätzten Position des ersten Emitters und der ersten geschätzten Position des zweiten Emitters, positioniert wird.

11. Verfahren nach Anspruch 9 oder 10, **dadurch gekennzeichnet, dass** auf Basis von mittels der Detektorelemente (60) erfassten Detektionssignalen ein Hintergrundwert bestimmt wird, wobei die weitere geschätzte Position auf Basis des Hintergrundwertes korrigiert wird, insbesondere wobei auf Basis der ermittelten Relativposition (R) mindestens ein Detektorelement (60) ausgewählt wird, auf Basis von dessen Detektionssignal der Hintergrundwert bestimmt wird, insbesondere wobei auf Basis des Hintergrundwertes ein Durchmesser einer synthetischen Lochblende angepasst wird.

12. Verfahren nach einem der Ansprüche 9 bis 11, **dadurch gekennzeichnet, dass** das Intensitätsminimum der Intensitätsverteilung des Beleuchtungslichts (B) mit der zweiten Scanvorrichtung (8) an eine neue Position in der Probe (2) verlagert wird, wobei ein Positionsfehler der zweiten Scanvorrichtung (8) in einem Zeitintervall während und/oder nach der Verlagerung an die neue Position mittels der ersten Scanvorrichtung (7) korrigiert wird.

13. Lichtmikroskop (1) umfassend
- eine Beleuchtungsoptik (3), die dazu ausgebildet ist, eine Probe (2) über einen Beleuchtungsstrahlengang (4) des Lichtmikroskops (1) mit Beleuchtungslicht (B) zu beleuchten und einen Fokus des Beleuchtungslichts (B) in der Probe zu erzeugen,
- einen in einem teilweise mit dem Beleuchtungsstrahlengang (4) zusammenfallenden Detektionsstrahlengang (5) des Lichtmikroskops (1) angeordneten Detektor (6) umfassend eine Mehrzahl von in einer Detektionsebene (D) angeordneten Detektorelementen (60), die dazu ausgebildet sind, von Emittern in der Probe ausgehendes Emissionslicht (E) zu erfassen, wobei die Detektionsebene (D) eine Bildebene bezüglich einer Fokusebene in der Probe (2) ist, in welcher der Fokus des Beleuchtungslichts (B) angeordnet ist,
- eine erste Scanvorrichtung (7) und eine zweite Scanvorrichtung (8), die jeweils dazu ausgebildet sind, den Fokus des Beleuchtungslichts (B) in der Probe (2) zu verlagern, wobei die ersten Scanvorrichtung (7) und die zweite Scanvorrichtung (8) hintereinander in dem Beleuchtungsstrahlengang (4) angeordnet sind, und wobei die zweite Scanvorrichtung (8) in dem gemeinsamen Beleuchtungsstrahlengang (4) und Detektionsstrahlengang (5) angeordnet ist, während die erste Scanvorrichtung (7) nur in dem Beleuchtungsstrahlengang (4) angeordnet ist, so dass das Emissionslicht (E) nur von der zweiten Scanvorrichtung (8) entscannt wird,
**dadurch gekennzeichnet, dass** das Lichtmikroskop (1) eine Recheneinheit (9) aufweist, die dazu ausgebildet ist, eine von einer Ablenkung des Beleuchtungslichts (B) durch die erste Scanvorrichtung (7) und die zweite Scanvorrichtung (8) sowie eine Ablenkung des Emissionslichts (E) durch die zweite Scanvorrichtung (8) abhängige Relativposition (R) zwischen einem Zentrum (Z) einer Projektion (P) der Detektionsebene (D) in die Probe (2) und einer Fokusposition (F) des Beleuchtungslichts in der Probe zu ermitteln und von den Detektorelementen erfasste Detektionssignale unter Berücksichtigung der ermittelten Relativposition auszuwerten.

14. Beleuchtungs- und Detektionsvorrichtung (100) für ein Lichtmikroskop (1) umfassend
- einen ersten Anschluss (110), der dazu ausgebildet ist, die Beleuchtungs- und Detektionsvorrichtung (100) mit einem Lichtmikroskop (1) zu verbinden,
- einen zweiten Anschluss (120), der dazu ausgebildet ist, Beleuchtungslicht (B) in einen Beleuchtungsstrahlengang (4) der Beleuchtungs- und Detektionsvorrichtung (100) einzukoppeln,
- einen Detektor (6) umfassend eine Mehrzahl von in einer Detektionsebene (D) angeordneten Detektorelementen (60), die dazu ausgebildet sind, von Emittern in einer Probe (2) ausgehendes Emissionslicht (E) zu erfassen, wobei die Detektionsebene (D) eine Bildebene bezüglich einer Fokusebene in der Probe (2) ist, in welcher der Fokus des Beleuchtungslichts (B) angeordnet ist,
- zumindest eine erste Scanvorrichtung (7), die dazu ausgebildet ist, den Fokus des Beleuchtungslichts (B) in der Probe (2) zu verlagern, wobei die erste Scanvorrichtung (7) nur in dem Beleuchtungsstrahlengang (4), nicht aber in dem Detektionsstrahlengang (5) angeordnet ist, so dass das Emissionslicht (E) nicht von der ersten Scanvorrichtung (8) entscannt wird,
- eine Recheneinheit (9), die dazu ausgebildet ist, eine von einer Ablenkung des Beleuchtungslichts (B) durch die erste Scanvorrichtung (7) abhängige Relativposition zwischen einem Zentrum (Z) einer Projektion (P) der Detektionsebene (D) in die Probe (2) und einer Fokusposition (F) des Beleuchtungslichts (B) in der Probe (2) zu ermitteln und von den Detektorelementen (60) erfasste Detektionssignale unter Berücksichtigung der ermittelten Relativposition auszuwerten.

15. Computerprogramm aufweisend Befehle, die das Lichtmikroskop (1) nach Anspruch 13 oder die Beleuchtungs- und Detektionsvorrichtung nach Anspruch 14 dazu veranlassen, das Verfahren nach einem der Ansprüche 1 bis 12 durchzuführen.
